# EUROPEAN PATENT SPECIFICATION

(11) **EP 3 798 945 B1**
(45) Date of publication and mention of the grant of the patent: **29.10.2025**
(21) Application number: 19306236.1
(22) Date of filing: 30.09.2019
(51) Int. Cl.: B61L 27/00

(54) **SYSTEM, APPARATUS AND METHOD FOR REMOTELY MANAGING OPERATION OF RAIL VEHICLES**
SYSTEM, VORRICHTUNG UND VERFAHREN ZUR FERNVERWALTUNG VON SCHIENENFAHRZEUGEN
SYSTÈME, APPAREIL ET PROCÉDÉ DE GESTION À DISTANCE DU FONCTIONNEMENT DE VÉHICULES FERROVIAIRES

(43) Date of publication of application: 31.03.2021
(73) Proprietor: Siemens Mobility S.A.S., 92320 Châtillon (FR)
(72) Inventor: Badarayani, Radha, 411021 Pune, Maharashtra (IN); Choudhary, Suraj, 411057 Pune, Maharashtra (IN); Parbhankar, Pramodkumar, 431505 Parbhani, Maharashtra (IN); Roy, Sourav, 490009 Bhilai (IN); Vaidya, Janhavi Y, 411002 Pune, Maharashtra (IN)
(74) Representative: Office Freylinger

(56) References cited:
- EP-A1- 0 106 983
- AU-A1- 2009 202 469
- US-A1- 2016 147 226
- US-A1- 2016 152 252
- US-A1- 2016 176 425
- US-A1- 2017 106 886

## Description

The present invention relates to rail automation, and more particularly to system, apparatus and method for remotely managing operation of rail vehicles.

Currently, rail vehicles have onboard control units that control the operation of the rail vehicle. Such onboard control units operate based on data received from multiple sources such as driver's cab controls, wayside units, beacons provided on the railway track and so on. The data is further processed by the onboard control unit provided on the rail vehicle to perform one or more operations. For example, the operation may be associated with application of brakes when a speed of the rail vehicle is above a predefined speed limit. However, if an issue arises with the onboard control unit, it may not be possible to reproduce the issue at a remote development site for purposes of bug fixing. In other words, remote troubleshooting of the onboard control unit becomes difficult. Consequently, maintenance personnel may have to perform physical checks on the rail vehicle in order to resolve the issue. In one example, the rail vehicle may be taken to a maintenance workshop for resolving the issue. In another example, the maintenance personnel may visit the location of the rail vehicle for resolving the issue. Further, prevention of such issues may require rigorous testing during a development phase of the onboard control unit. Similarly, upgradation of the onboard control unit may also become difficult as it is necessary to upgrade both the hardware and the software associated with the onboard control unit. The above factors may lead to an increase in the downtime of the rail vehicle. As a result, the operation of the rail vehicle is affected.

US 2016/176425 A1 refers to a railroad control system in that control logic is partly implemented remotely from the train, with an interface to a user.

EP 0 106 983 A1 explains data transmission to and from railway trains with the goal to set up functionality in the trains.

AU 2009 202 469 A1 discloses a heavy haul rail network system that operates with locomotives under control of a computerbased system without drivers stationed onboard.

US 2017/0106886 A1 discloses a data backup system that keeps data with operational characteristics of a locomotive. The data is used for controlling, monitoring and enhancing operations of a train. To provide the backup function, a communication unit on-board the locomotive is communicatively coupled with an off-board server.

US 2016/0147226 A1 explains automated service management for a vehicle that can be a rail vehicle.

In light of the above, there exists a need for remotely managing the operation of a rail vehicle in real-time.

Therefore, it is an object of the invention to provide a system, an apparatus, and a method for remotely managing operation of a rail vehicle in real-time.

The object of the present invention is achieved by a method for managing operation of a rail vehicle as disclosed herein. The term 'rail vehicle', as used herein, may refer to any vehicle that runs over railway tracks for transportation of cargo or passengers or for performing maintenance activities along the railway track. Non-limiting examples of rail vehicles may include passenger trains, intercity trains, high-speed rail services, higher-speed rail services, rapid transit trains, monorails, people movers, freight trains and so on. The rail vehicle may consist of a single railcar or a plurality of railcars coupled together.

The method includes identifying, by a first processing unit, a virtual subsystem for managing a specific operation of the rail vehicle from a plurality of virtual subsystems based on operational data associated with the rail vehicle. The term 'virtual subsystem', as used herein, refers to a virtual machine that emulates functionalities of logical components of a physical subsystem used for managing the operation of the rail vehicle. The operational data is obtained from one or more system components in real-time. The system components refer to any remotely located equipment that is configured for communicating with the first processing unit. The equipment may include track equipment and rail equipment. The track equipment may include equipment installed on or along the railway track and may include balises, wayside signalling units, interlocking systems and so on. The rail equipment may include equipment on the rail vehicle and may include sensing units, pantograph systems, braking systems, radio communication systems, onboard units, Juridical Recording Units (JRU), radar systems, odometry circuits, axle accelerometers, driver cab controls and so on. The rail equipment may be associated with the rail vehicle that is being managed or another rail vehicle, for example, a rail vehicle running on a parallel track. In addition to track equipment and rail equipment, the system components may also include equipment such as transponders installed at facilities associated with railway regulatory authorities or at railway stations. Further, the operational data may also be generated by another virtual subsystem. The operational data comprises values of parameters associated with the operation of the rail vehicle. It must be understood that the parameters associated with the operation of the rail vehicle may include any parameter that indicates an operating condition of the rail vehicle. For example, the parameters associated with the operation of the rail vehicle may relate to a speed of the rail vehicle, a permitted speed of the rail vehicle, geographical position of the rail vehicle, distance covered by the rail vehicle from a starting point, upcoming stations, distance of the rail vehicle to an upcoming station or a stopping point, stoppages, number of brakings, direction of the rail vehicle, signals followed by the rail vehicle, a mode of operation of the rail vehicle, status of communication interfaces on the rail vehicle, operational status of digital inputs and outputs related to fans, lamps and doors and so on. In one example, the values of the parameters may be directly measured as numerical values, for example, speed and distance. In another example, the values of the parameters may not be directly measured as numerical values but may be converted to numerical values using a suitable coding system. For example, the mode of operation of the rail vehicle may be one of manual, automatic, semi-automatic or extended automatic. Each of the modes of operation may be assigned a numerical code, say manual is 0, semi-automatic is 1, automatic is 2 and extended automatic is 3. In one example, the identified virtual subsystem is associated with one or more vital functions for ensuring safety of the rail vehicle. The vital functions may include, for example, enforcing compliance with speed restrictions or signals. In another example, the identified virtual subsystem may be associated with one or more non-vital functions. The non-vital functions may include functions that are otherwise performed by a driver of the rail vehicle, for example, maintaining accurate stopping position at railway stations, controlling of platform screen doors at railway stations, opening and closing of doors on the rail vehicle, operation of lights, triggering announcements or alarms and so on. In yet another example, the identified virtual subsystem may be associated with communication-related functions. The communication-related functions may include, for example, controlling of radio-based communication interfaces between system components or between the system component and the first processing unit. In one embodiment, the virtual subsystem may be identified based on a source of the operational data. For example, if the operational data is obtained from the balise, then the virtual subsystem associated with vital functions may be identified. In another embodiment, the virtual subsystem may be identified based on the type of operational data. For example, if the operational data is associated with status of a communication interface on the rail vehicle, then the virtual subsystem associated with communication related functions may be identified. In yet another embodiment, the virtual subsystem may be identified based on a value of the parameter that is associated with the operational data. For example, if the speed of the rail vehicle is less than the permitted speed for the rail vehicle, then the virtual subsystem associated with non-vital functions may be identified. Otherwise, the virtual subsystem associated with vital functions may be identified. In yet another embodiment, the virtual subsystem associated with non-vital functions is triggered based on an output of the virtual subsystem associated with vital functions.

The present invention relates to virtualising subsystems such as Automatic Train Operation (ATO), Automatic Train Protection (ATP) and so on, that are traditionally hardware-based subsystems. More specifically, in the present invention, logical components corresponding to traditional hardware-based subsystems are located as virtual subsystems at a remote location such as a cloud server. As a result, the virtual subsystems may be common to a plurality of rail vehicles, as opposed to the traditional use of separate hardware-based subsystems on each rail vehicle. Further, the virtual subsystems may be provided as a cloud-based service to railway operators, for managing operation of rail vehicles, wherein the railway operators may be charged for usage of the cloud-based service.

The method further includes generating one or more operational instructions capable of managing operation of the rail vehicle using the identified virtual subsystem based on a configuration of the rail vehicle. The configuration of the rail vehicle may be based on several factors such as length of the rail vehicle, number of rail cars (or couplings) on the rail vehicle, mode of operation of the rail vehicle, a type of service associated with the rail vehicle, an OEM associated with the rail vehicle, hardware and associated software used on the rail vehicle, communication protocols used by the hardware to communicate with system components and so on. In one alternative of the invention, the configuration of the rail vehicle is prestored in a database. Further, the prestored configuration of the rail vehicle may be fetched for generating the one or more operational instructions, based on an identity of the rail vehicle. In the other alternative of the invention, the configuration of the rail vehicle is determined on an ad hoc basis, based on the operational data associated with the rail vehicle.

Advantageously, the virtualisation of subsystems helps in centralised monitoring of the operation of the rail vehicle. Further, the virtualisation of subsystems also facilitates easy remote troubleshooting for bug fixing and also in providing quick technical support. The method further includes initiating execution of the one or more operational instructions capable of managing operation of the rail vehicle, at system components configured for executing the one or more operational instructions. In one example, the one or more operational instructions may be associated with controlling a speed of the rail vehicle by decelerating the rail vehicle through the application of brakes. In another example, the one or more operational instructions may be associated with opening of doors for deboarding passengers at a railway station, upon stopping the rail vehicle at the appropriate position.

Advantageously, the present invention helps in reducing the amount of hardware present on the rail vehicle by providing only the necessary operational instructions required for execution at the system components, using the virtual subsystems, rather than having separate circuitry for generating the operational instructions on the rail vehicle.

The method may further include determining an anomaly in the operation of the rail vehicle based on the operational data. The term 'anomaly' may refer to a deviation in normal operation of any component of the rail vehicle. The component of the rail vehicle may be an electrical component, an electronic component, a mechanical component, an electromechanical component and so on. In one example, the anomaly in the operation of the rail vehicle may be associated with Heating, Ventilation and Air-Conditioning (HVAC) in the rail vehicle. In another example, the anomaly may be in the form of heating up of a component of the rail vehicle. In yet another example, the anomaly may be in the form of fuse failure. In yet another example, the anomaly may be in the form of a large speed difference along an axle, with respect to a predefined maximum speed difference. In yet another example, the anomaly may be in the form of an abnormal speed measured on by an axle accelerometer. In yet another example, the anomaly may be associated with logging of data associated with the operation of the rail vehicle. In yet another example, the anomaly may be in the form of abnormal noises. In yet another example, the anomaly may be in the form of abnormal vibrations. In yet another example, the anomaly may be in the form of malfunctioning or nonfunctioning of a component of the rail vehicle.

In one embodiment, determining the anomaly in the operation of the rail vehicle based on the operational data includes analysing the operational data to determine deviation in values of one or more critical parameters with respect to a predefined range of values for the one or more critical parameters. Further, the anomaly is predicted based on the deviation in the values of the one or more critical parameters. The critical parameters may include, but not limited to, speed, velocity, acceleration, temperature, pressure, vibration, friction, noise, frequency and so on. For example, the speed of the rail vehicle for normal operation may be in the range of 150 kmph to 200 kmph. If the speed of the rail vehicle measured by axle accelerometers is greater than 200 kmph, then the rail vehicle is associated with the anomaly of abnormal speed. In yet another example, if the temperature of a mechanical component is greater than a predefined temperature, say 50°C, then the rail vehicle is associated with the anomaly of abnormal heating of the mechanical component. The deviation in the values of the critical parameters may also be based on Railway Safety Regulations defined for a territory in which the rail vehicle operates.

Advantageously, the present invention enables determining the anomaly in the operation of the rail vehicle without the need for performing physical tests on the rail vehicle.

The method may further include determining a root cause of the anomaly in the operation of the rail vehicle using a root cause analysis technique. The root cause may be defined as any factor that causes the anomaly in the operation of the rail vehicle. For example, the root cause may be associated with lack of lubrication, wear and tear of components, improper coupling of components, electrical faults, improper control commands given by a driver, faulty signalling and so on. The root cause may be determined based on a type of the anomaly by using any known root cause analysis technique. In one example, the root cause analysis technique may employ root cause analysis models such as Neural Networks, Bayesian network classifiers, Support Vector Machines (SVMs) and so on, for inferring the root cause based on the type of anomaly. Alternatively, the root cause may also be determined using root cause analysis techniques such as fault-tree analysis, failure mode and effects analysis and so on. In addition to determining the root cause, a location of the root cause may also be identified using the root cause analysis technique.

Advantageously, the root cause of the anomaly may be predicted using root cause analysis techniques using the operational data acquired from the rail vehicle.

The method may further include predicting a safety risk associated with the anomaly in the operation of the rail vehicle. The term 'safety risk', as used herein, may refer to the likelihood of loss, damage, injury, liability or any other negative outcome, resulting from the anomaly. In one embodiment, the safety risk may be predicted using statistical techniques. For example, the statistical technique may involve calculating a risk indicator value based on the operational data. The risk indicator value may be further used to determine the safety risk. For example, the safety risk may be associated with collision of the rail vehicle, derailment of the rail vehicle, fire breakouts, loss of a communication channel between the rail vehicle and a system component, loss of communication between the rail vehicle and the first processing unit, and so on. The method further includes determining one or more actions for mitigating the safety risk and generating operational instructions for implementing the one or more actions for mitigating the safety risk. The one or more actions may include, but is not limited to, engaging emergency brakes, triggering alarms, and so on. The one or more actions may also include transmitting notifications comprising recommendations or instructions for the driver or other railway authorities. The recommendations may include checks or measures to be taken in order to alleviate the safety risk. For example, the recommendation may include a nearest stoppage and a suggestion to stop at the nearest stoppage to replace or repair a faulty component. In another example, the rail vehicle may be operating in automatic mode and the recommendations may include steps that the driver may take in order to avoid the safety risk. For example, firstly the driver may be asked to change the mode of operation from automatic mode to manual mode. Further, the driver be asked to check for an indication on a control panel inside the rail vehicle. Further, if the indication is present, the driver may provided with one or more further steps to be performed to avoid the safety risk. The operational instructions for executing the one or more actions for mitigating the safety risk may be generated by the virtual subsystem identified based on the operational data. The operational instructions may be executed at the rail vehicle, by the system components, in order to mitigate the safety risk.

Advantageously, the present invention is capable of automatically providing operational instructions to the system components for safety risk mitigation without necessitating intervention by a human operator.

The method may further include determining a remaining life of the rail vehicle based on the anomaly in the operation of the rail vehicle. In one embodiment, the remaining life of the rail vehicle is determined based on a deviation in values of critical parameters from the predefined values or the predefined range of values. For example, a condition indicator may be calculated based on the deviation in values of critical parameters. Further, the condition indicators may be fit into a degradation model in order to determine the remaining life of the rail vehicle. In one example, the remaining life of the rail vehicle may be determined in terms of remaining life of a critical component, say an axle, of the rail vehicle. The term 'critical component' as used herein may refer to any component which upon failure results in high safety risk for the rail vehicle. In another embodiment, data logs associated with the operational data, maintenance history, operating conditions, operating history, age of components and so on, may also be used for determining the remaining life of the rail vehicle, for example, using statistical techniques such as regression. Alternatively or in addition to the data log associated with the rail vehicle, data logs associated with other similar rail vehicles may also be used for determining the remaining life of the rail vehicle. In one example, the other similar rail vehicles may include rail vehicles having components manufactured by the same Original Equipment Manufacturer (OEM) as the components of the rail vehicle. In another example, the other similar rail vehicles may include rail vehicles having similar configuration as the rail vehicle. In yet another example, the other similar rail vehicles may include rail vehicles that are operating under similar operating conditions, for example, operating on the same route or for the same service (mass transit, mainline transit, freight) and so on. Further, hazard models and probability distributions associated with failure times of components of the rail vehicle are used to determine the remaining life of the rail vehicle based on the data logs. In yet another embodiment, the remaining life of the rail vehicle may be determined based on run-to-failure data associated with different components of the rail vehicle. The run-to-failure data may be obtained from other components exhibiting similar behaviour as the components of the rail vehicle. Further, degradation profiles of the other components are determined based on the run-to-failure data. Further, the operational data or other data in the data logs associated with the rail vehicle is compared with the degradation profiles in order to identify the closest matching degradation profile. Further, the closest matching degradation profile is used to determine the remaining life of the rail vehicle.

The method may further include optimising a downtime of the rail vehicle by scheduling a maintenance activity for the rail vehicle based on the remaining life of the rail vehicle. The maintenance activity of the rail vehicle may be scheduled when the remaining life of the rail vehicle is, say, 30 days. The downtime of the rail vehicle be estimated based on factors, including but not limited to, a geographical location of the rail vehicle, a type of service associated with the rail vehicle, anomalies associated with the operation of the rail vehicle, root causes associated with the anomalies, availability of spares and service personnel and so on. The geographical location of the rail vehicle may be used to determine a distance to a nearest depot where the rail vehicle may be taken for maintenance. The type of service may be used to determine a frequency of operation of the rail vehicle and an associated time schedule of the operation. The anomalies and the root causes associated with the anomalies may be used to estimate an actual repair time or a maintainability of the rail vehicle during the downtime. For example, replacement of a component may take less time compared to repairing the component. The availability of spares and service personnel may be used to schedule the maintenance activity. For example, if the spares are unavailable, then the probability that the spares may be procured before the start of the maintenance activity may also be considered for determining the downtime. In one aspect of the present invention, the service personnel may also be informed to procure the spares before the start of the maintenance activity by sending a notification to an electronic device (not shown) associated with the service personnel. The electronic device may be a mobile phone, a personal computer, a tablet and so on. The notification may be sent a predefined number of days, say 20 days, ahead of the maintenance activity so as to enable the service personnel to procure the spares. Similarly, the service personnel may receive multiple notifications for procuring spares associated with one or more rail vehicles. In addition, the notifications may also include web links to sources for procuring the spares. The web links may be selected and added to the notification based on, for example, the type of spares required. In another example, the maintenance activity may be scheduled based on availability of the service personnel for performing the maintenance activity. Based on the above factors, the maintenance activity may be scheduled before the remaining life of the rail vehicle is exhausted, in order to optimise the downtime.

Advantageously, the present invention helps in optimising the downtime of the rail vehicle, thereby ensuring maximized productivity of the rail vehicle.

The method may further include generating a report associated with the operation of the rail vehicle. The report may include information such as values of parameters associated with the operation of the rail vehicle, anomalies detected, remaining life of the rail vehicle, maintenance activities scheduled, the optimised downtime estimated, operational instructions provided to the system components, an outcome of providing the operational instructions to the system components and so on. The report may include both text and graphical representations such as charts, graphs, tables and so on. In one example, the report may be updated continuously in real-time. In another example, the report may be generated periodically, say every 15 minutes. The generated report may be further transmitted to a display unit. The display unit may be associated with service personnel, railway personnel, regulatory authorities and so on, and may be installed on the rail vehicle or at a remote location. The display unit may be part of a personal computer, a workstation, a Human-Machine Interface, a personal digital assistant and so on.

Advantageously, the present invention reduces manual intervention required for managing the operation of the rail vehicle.

The object of the present invention is achieved by an apparatus comprising one or more first processing units, and a first memory unit communicatively coupled to the one or more first processing units. The first memory unit comprises a management module stored in the form of machine-readable instructions executable by the one or more first processing units. The management module is configured to perform method steps described above. The execution of the management module may also be performed using co-processors such as Graphical Processing Unit (GPU), Field Programmable Gate Array (FPGA) or Neural Processing/Compute Engines.

According to an embodiment of the present invention, the apparatus may be an edge computing device. As used herein "edge computing" refers to computing environment that is capable of being performed on an edge device (e.g., connected to the system components at one end and to a remote server(s) such as a computing server(s) or cloud computing server(s) on the other end), which may be a compact computing device that has a small form factor and resource constraints in terms of computing power. Alternatively, a network of the edge computing devices can also be used to implement the apparatus. Such a network of edge computing devices is referred to as a fog network.

In a preferred embodiment, the apparatus is a cloud computing system having a cloud computing based platform configured to provide a cloud service for managing operation of the rail vehicle. As used herein, "cloud computing" refers to a processing environment comprising configurable computing physical and logical resources, for example, networks, servers, storage, applications, services, etc., and data distributed over the network, for example, the internet. The cloud computing platform may be implemented as a service for managing operation of rail vehicles. In other words, the cloud computing system provides on-demand network access to a shared pool of the configurable computing physical and logical resources. The network is, for example, a wired network, a wireless network, a communication network, or a network formed from any combination of these networks.

Additionally, the object of the present invention is achieved by a system for managing an operation of the rail vehicle. The system includes one or more system components for providing operational data associated with the operation of the rail vehicle. The operational data comprises values of parameters associated with the operation of the rail vehicle. The system further includes an apparatus as described above, communicatively coupled to the one or more system components. The apparatus is configured for managing operation of the rail vehicle based on the operational data according to the method described above. The system components may include, but not limited to, equipment onboard the rail vehicle and track equipment such as balises and wayside units. In one embodiment, the system components are configured for communicating with each other in addition to communicating with the apparatus, over a network. It must be understood that the equipment on the rail vehicle may communicate with equipment on other rail vehicles, track equipment and the apparatus. More specifically, the system components within the rail vehicle may communicate with each other using for example, a Train Communication Network (TCN) based on Ethernet technology or using Radio communication. The system components on the rail vehicle may communicate with track equipment or equipment on other rail vehicles based on, for example, Train-to-Wayside Communication (TWC) based on GSM technology, WLAN, satellite communication, and so on. Similarly, the system components may communicate with the apparatus using wireless communciation technologies such as Wi-Fi, satellite communication, radio communication, microwave channel communication, cellular communication and so on. In another embodiment, the communication between the system components may be controlled by the apparatus, for example, using cloud communications.

The system further comprises an onboard unit located on the rail vehicle. The onboard unit comprises a plurality of interfaces for communicating with the one or more system components and the apparatus for enabling the one or more system components communicate with the apparatus. The apparatus further includes one or more second processing units and a second memory communicatively coupled to the one or more second processing units. The second memory comprises an offline emergency module stored in the form of machine-readable instructions executable by the one or more second processing units. The offline emergency module is configured for managing the operations of the rail vehicle when a communication between the onboard unit and the apparatus is interrupted. In one embodiment, the onboard unit may manage the operation of the rail vehicle, when the communication is interrupted, based on previously stored operational instructions. In one example, the onboard unit may provide an indication to the driver to switch to manual mode from auto mode when the communication is interrupted. In another example, the onboard unit may automatically degrade the mode of operation of the rail vehicle when the communication is interrupted. According to the invention, the onboard unit instructs another onboard unit, in another railcar on the rail vehicle, to communicate with the apparatus for managing the operation of the vehicle. In yet another example, the onboard unit may activate an emergency braking system when the communication with the apparatus is disrupted. In another embodiment, the onboard unit may use operational data captured immediately before the disruption of the communication, to generate operational instructions to be executed by the system components.

The object of the present invention is achieved by a computer-program product having machine-readable instructions stored therein, which when executed by a processing unit, cause the processing unit to perform a method as describe above.

The realization of the invention by a computer program product and/or a computer-readable medium has the advantage that already existing management systems can be easily adopted by software updates in order to work as proposed by the invention.

The computer program product can be, for example, a computer program or comprise another element apart from the computer program. This other element can be hardware, for example a memory device, on which the computer program is stored, a hardware key for using the computer program and the like, and/or software, for example a documentation or a software key for using the computer program.

The above-mentioned attributes, features, and advantages of this invention and the manner of achieving them, will become more apparent and understandable with the following description of embodiments of the invention in conjunction with the corresponding drawings. The illustrated embodiments are intended to illustrate, but not limit the invention.

The present invention is further described hereinafter with reference to illustrated embodiments shown in the accompanying drawings, in which:
- FIG 1A: illustrates a block diagram of a system for managing operation of a rail vehicle, in accordance with one embodiment of the present invention;
- FIG 1B: illustrates block diagram of a management module present in an apparatus for managing the operation of the rail vehicle, in accordance with one embodiment of the present invention;
- FIG 1C: illustrates a block diagram of an onboard unit, in accordance with one embodiment of the present invention;
- FIG 2: illustrates a flowchart of a method for managing operation of the rail vehicle, in accordance with one embodiment of the present invention;
- FIG 3: illustrates a flowchart of a method for mitigating a safety risk associated with the rail vehicle, in accordance with one embodiment of the present invention;
- FIG 4: illustrates a flowchart of a method for optimising a downtime of the rail vehicle, in accordance with one embodiment of the present invention;
- FIG 5: illustrates a flowchart of a method for managing a vital operation of the rail vehicle, in accordance with one exemplary embodiment of the present invention; and
- FIG 6: illustrates a flowchart of a method for managing a non-vital operation of the rail vehicle, in accordance with one exemplary embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

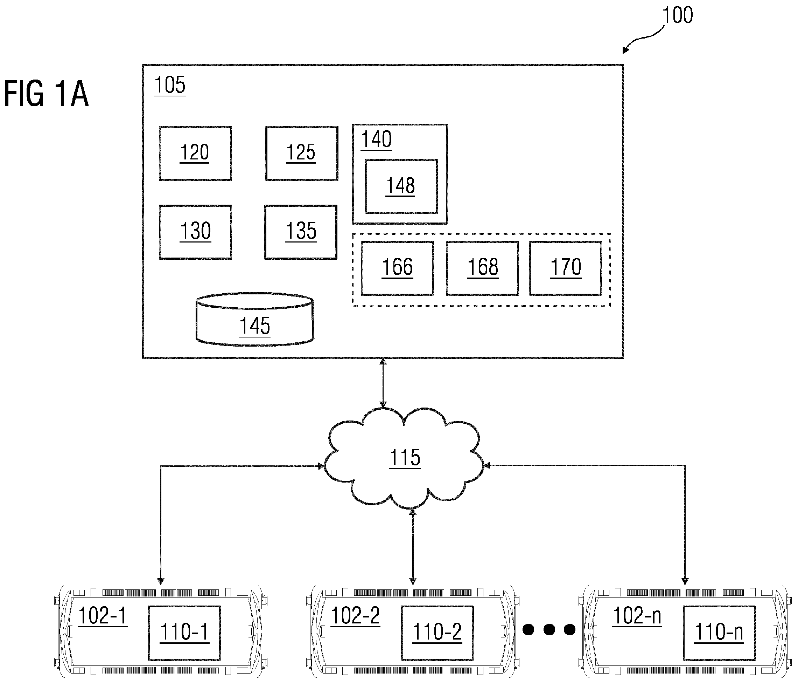

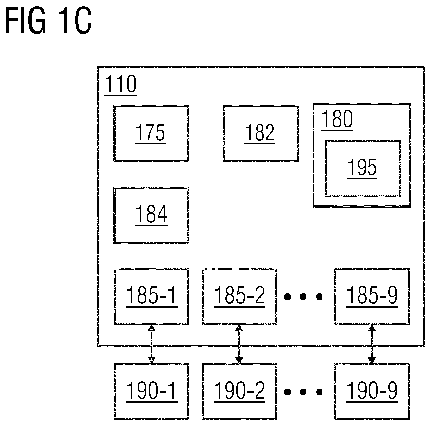

Referring to FIG 1A, a block diagram of a system 100 for managing operation of a plurality of rail vehicles 102-1, 102-2..102-n is shown, in accordance with one embodiment of the present invention. The system 100 includes an apparatus 105. The apparatus 105 is communicatively coupled to a plurality of onboard units 110-1, 110-2...110-n. The plurality of onboard units 110-1-n, henceforth collectively referred as onboard unit 110, is associated with one or more rail vehicles -among the plurality of rail vehicles 102-1, 102-2..102-n. The onboard unit 110 is configured to communicate with one or more system components (not shown) and the apparatus 105. The functioning of the onboard unit 110 is explained in further detail using FIG 1C.

In the present embodiment, the onboard unit 110 is communicatively coupled to the apparatus 105 through a network 115. The onboard unit 110 may connect to the network 115 through one or more access points (not shown). In one embodiment, the one or more access points may be located on, say the rail vehicle 102-1, henceforth referred as rail vehicle 102. In another embodiment, the one or more access points may be located along the wayside of a railway track over which the rail vehicle 102 moves. For example, the access point may be integrated into a wayside signalling unit. The network 115 may be based on 5G communication, Wi-Fi communication, Microwave channel communication or a combination thereof.

The apparatus 105 may be a (personal) computer, a workstation, a virtual machine running on host hardware, a microcontroller, or an integrated circuit. As an alternative, the apparatus 105 may be a real or a virtual group of computers (the technical term for a real group of computers is "cluster", the technical term for a virtual group of computers is "cloud").

The apparatus 105 includes a first communication unit 120, one or more first processing units 125, a first display 130, a first Graphical User Interface (GUI) 135, a first memory 140 and a database 145 communicatively coupled to each other. In one embodiment, the first communication unit 120 includes a transmitter (not shown), a receiver (not shown) and Gigabit Ethernet port (not shown). The first memory 140 may include 2 Giga byte Random Access Memory (RAM) Package on Package (PoP) stacked and Flash Storage. The one or more first processing units 125 are configured to execute the defined computer program instructions in the modules. Further, the one or more first processing units 125 are also configured to execute the instructions in the first memory 140 simultaneously.

The first processing unit 125 may include any type of computational circuit including, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The first processing unit 125 may also include embedded controllers, such as generic or programmable logic devices or arrays, application specific integrated circuits, single-chip computers, and the like. In general, the first processing unit 125 may comprise hardware elements and software elements. The first processing unit 125 may be configured for multithreading that is hosting different calculation processes at the same time and executing them either in parallel or switching between active and passive calculation processes.

The first display 130 includes a High-Definition Multimedia Interface (HDMI) display and a cooling fan (not shown). Additionally, control personnel may access the apparatus 105 through the first GUI 135. The first GUI 135 may include a web-based interface, a web-based downloadable application interface, and so on.

The database 145 may store data logs associated with the operation of the rail vehicle 102. The data logs may comprise values of parameters associated with the operation of the rail vehicle 102, along with corresponding time stamps. In addition, the database 145 may also store information associated with route information of the rail vehicle 102, diagnostics associated with the rail vehicle 102, maintenance activities performed on the rail vehicle 102 and so on. In one implementation, the database 145 may be stored in the first memory 140. In another embodiment, the database 145 may be stored on a database server (not shown).

The first memory 140 may be one of a volatile memory and a non-volatile memory. The first memory 140 may be coupled for communication with the first processing unit 125. The first processing unit 125 may execute machine-readable instructions and/or code stored in the first memory 140. A variety of computer-readable storage media may be stored in and accessed from the first memory 140. The first memory 140 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

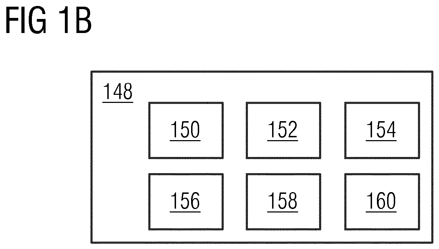

In the present embodiment, the first memory 140 further comprises a management module 148. The management module 148 comprises a communication module 150, a core manager module 152, a configuration module 154, a data analysis module 156, a data logging module 158 and a report generation module 160 as shown in FIG 1B. Each of the above modules are in the form of machine-readable instructions on any of the above-mentioned storage media and may be in communication to and executed by the first processing unit 125. The management module 148 is configured to manage, upon execution by the first processing unit 125, specific operations of the rail vehicle 102 based on at least one of a virtual Automatic Train Operation (ATO) subsystem 166, a virtual Automatic Train Protection (ATP) subsystem 168 and a virtual Interface (ITF) subsystem 170. The following description explains in detail, functions of each of the modules in the management module 148 when executed by the one or more first processing units 125.

The communication module 150 is configured for managing communication between the apparatus 105 and the onboard unit 110. For example, the communication module 150 may control the first communication unit 120 of the apparatus 105 for communicating with the onboard unit 110 over the network 115. In addition, the communication module 150 may also preprocess the operational data received from the onboard unit 110 by performing operations such as data conversion, filtering, smoothening and so on. Further, the communication module 150 may route the preprocessed data to one or more modules of the apparatus 105 based on the source or value of parameters present in the operational data.

The core manager module 152 is configured to handle operational data received from the plurality of onboard units 110. In one example, the core manager module 152 may segregate the operational data received from each of the onboard unit among the plurality of onboard units 110. Upon segregation, the core manager module 152 may identify a virtual subsystem based on the type or source of the operational data or based on output of another virtual subsystem. More specifically, the operational data associated with non-vital functions are provided to the virtual ATO subsystem 166 and the operational data associated with vital functions are provided to the virtual ATP subsystem 168. In one example, track coordinates obtained from balises may be provided to the virtual ATP subsystem 168, based on which the virtual ATP subsystem 168 may determine whether brakes are to be applied or if the rail vehicle 102 should continue moving, so as to comply with a speed or signal restrictions associated with a location of the rail vehicle 102. The virtual ATP subsystem 168 may further generate digital outputs to indicate whether the rail vehicle 102 should continue to move or apply brakes and corresponding operational instructions. In another example, the speed of the rail vehicle 102 received from radar system 190-3 may be given to the virtual ATO subsystem 166. The virtual ATO subsystem 166 may further determine a rate of accelaration or decelaration required for controlling the speed of the train. The virtual ITF subsystem 170 may generate operational instructions for controlling radio communications between system components and also between one or more system components and the onboard unit 110.

The configuration module 154 is configured to modify the one or more operational instructions generated based on a configuration associated with the rail vehicle 102. The configuration of the rail vehicle 102 may be based on format of 'ini' files or other similar initialization files used in configuring the software associated with one or more system components on the rail vehicle 102. In addition, the configuration may also be based on the hardware associated with the system components, say number of onboard units on the rail vehicle 102.

The data logging module 158 may log the operational data received from the onboard unit 110 to the database 145. The operational data may be logged based on, for example, timestamps associated with the operational data, an identity associated with the onboard unit 110 or the rail vehicle 102 and so on.

The data analysis module 156 may analyse the operational data to determine trends or patterns associated with the operational data. Further, the data analysis module 156 may draw inferences from the operational data based on the analysis of the operational data. The analysis may be performed based on descriptive techniques, exploratory techniques, inferential techniques, predictive techniques, causal techniques, qualititative analysis techniques, quantitative analysis techniques and so on. The inferences drawn based on the analysis may be associated with a health condition of the rail vehicle 102, a remaining life of the rail vehicle 102, anomalies associated with the operation of the rail vehicle 102, scheduling of maintenance activities for the rail vehicle 102 and so on.

The report generation module 160 may generate reports associated with the operation of the rail vehicle 102. The reports may be include details such as health condition of the rail vehicle 102 along with an associated time-stamp, a remaining life of the rail vehicle 102, anomalies in the operation of the rail vehicle 102, maintenance activities scheduled, an optimised downtime of the rail vehicle 102 if the maintenance activities are performed and so on. The reports generated by the report generation module 160 may be further displayed to an end user, on a web user interface associated with the first GUI 135.

Those of ordinary skilled in the art will appreciate that the hardware depicted in FIG 1A may vary for different implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter, network connectivity devices also may be used in addition or in place of the hardware depicted. The depicted example is provided for the purpose of explanation only and is not meant to imply architectural limitations with respect to the present disclosure.

A system in accordance with an embodiment of the present disclosure includes an operating system employing a graphical user interface. The operating system permits multiple display windows to be presented in the graphical user interface simultaneously with each display window providing an interface to a different application or to a different instance of the same application. A cursor in the graphical user interface may be manipulated by a user through the pointing device. The position of the cursor may be changed and/or an event such as clicking a mouse button, generated to actuate a desired response.

One of various commercial operating systems, such as a version of Microsoft Windows^{™} may be employed if suitably modified. The operating system is modified or created in accordance with the present disclosure as described.

The present invention is not limited to a particular computer system platform, processing unit, operating system, or network. One or more aspects of the present invention may be distributed among one or more computer systems, for example, servers configured to provide one or more services to one or more client computers, or to perform a complete task in a distributed system. For example, one or more aspects of the present invention may be performed on a client-server system that comprises components distributed among one or more server systems that perform multiple functions according to various embodiments. These components comprise, for example, executable, intermediate, or interpreted code, which communicate over a network using a communication protocol. The present invention is not limited to be executable on any particular system or group of system, and is not limited to any particular distributed architecture, network, or communication protocol.

Referring to FIG 1C, a block diagram of the onboard unit 110 is shown, in accordance with one embodiment of the present invention. The onboard unit 110 comprises a second processing unit 175, a second memory 180, a second GUI 182 and a second communication unit 184. The second GUI 182 may include a web-based interface, a web-based downloadable application interface, and so on. The second communication unit 184 may consist of a transmitter (not shown), a receiver (not shown) and a communication port (not shown) for connecting to the network interface directly or through access points. More specifically, the second communication unit 184 enables the onboard unit 110 to communicate with the apparatus 105.

The second processing unit 175, as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The second processing unit 175 may also include embedded controllers, such as generic or programmable logic devices or arrays, application specific integrated circuits, single-chip computers, and the like. In general, the second processing unit 175 may comprise hardware elements and software elements. The second processing unit 175 may be configured for multithreading for hosting different calculation processes at the same time and executing the either in parallel or switching between active and passive calculation processes.

The second memory 180 may be volatile memory and non-volatile memory. The second memory 180 may be coupled for communication with the second processing unit 175. The second processing unit 175 may execute machine-readable instructions and/or code stored in the second memory 180. A variety of computer-readable storage media may be stored in and accessed from the second memory 180. The second memory 180 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

The onboard unit 110 further comprises a plurality of Input/Output (I/O) interfaces 185-1, 185-2...185-9 for receiving operational data associated with the rail vehicle 102 from system components 190-1, 190-2...190-3 (henceforth collectively referred as system components 190) in real-time and for providing operational instructions, generated by the apparatus 105, to the system components 190 for execution at the system components 190. For the sake of brevity and for ease of explanation, the present embodiment is explained by considering a Human Machine Interface (HMI) 190-1, a Juridical Recording Unit (JRU) 190-2, a radar system 190-3, a Odometer Pulse Generator (OPG) 190-4, a balise 190-5, a Passenger Information System/Transit Management System (PIS/TMS) 190-6, a diagnostics system 190-7, driver's cab controls 190-8 and a train control 190-9 as the system components 190. Accordingly, the plurality of I/O interfaces 185-1, 185-2..185-9 include a Human Machine Interface (HMI) interface 185-1, a Juridical Recording Unit (JRU) interface 185-2, radar interface 185-3, Odometer Pulse Generator (OPG) interface 185-4, a balise interface 185-5, a Passenger Information System/Transit Management System (PIS/TMS) interface 185-6, a diagnostics interface 185-7, a driver's cab interface 185-8 and a train control interface 185-9. Each of the I/O interfaces 185-1, 185-2..185-9 may comprise a transmitter (not shown), a receiver (not shown) and a communication port (not shown) that enables the onboard unit 110 to communicate with the respective system component.

The HMI interface 185-1 is configured to enable the onboard unit 110 to communicate with the HMI 190-1 on the rail vehicle 102. The onboard unit 110 may receive inputs or control commands provided by a driver the HMI 190-1, over the HMI interface 185-1. The onboard unit 110 may also provide feedbacks to the driver through the HMI 190-1, over the HMI interface 185-1. In one example, the HMI 190-1 may be an LCD touch screen for receiving touch gestures. For example, the human operator may provide touch gestures for changing a mode of operation of the rail vehicle 102 from manual to semi-automatic. The LCD touch screen may also provide visual indications relating to a status of operation of the rail vehicle 102. For example, the status may include a speed of the rail vehicle 102, a permitted speed of the rail vehicle 102, an upcoming station, an estimated time of arrival at the upcoming station and so on. The visual indications may also relate to alarms or instructions to the driver of the rail vehicle 102.

The Juridical Recording Unit (JRU) interface 185-2 is configured to enable the onboard unit 110 to communicate with the JRU 190-2. The JRU 190-2 is a device which facilitates collecting, storing and retrieving vital information associated with the rail vehicle 102. The vital information may include audio and video signals related to events associated with the rail vehicle 102. For example, the video signals are collected from CCTV units installed across the rail vehicle 102. The onboard unit 110 may store and retrieve information stored in the JRU 190-2, through the JRU interface 185-2.

The radar interface 185-3 is configured to enable the onboard unit 110 to receive a speed of the rail vehicle 102 from the radar system 190-3. In one example, the radar system 190-3 may be mounted on the rail vehicle 102 and is configured to measure a speed of the rail vehicle 102, for example, based on Doppler effect.

The Odometer Pulse Generator (OPG) interface 185-4 is configured to enable the onboard unit 110 to communicate with the OPG 190-4. The OPG 190-4 may be located on an axle of the rail vehicle 102 and may measure a distance covered by the rail vehicle 102.

The balise interface 185-5 is configured to enable the onboard unit 110 to communicate with at least one of a balise transmission module provided on the rail vehicle 102 or a balise 190-5 provided on the railway track. Each balise may be associated with unique track coordinates, that enable the onboard unit 110 to determine an accurate location of the rail vehicle 102.

The Passenger Information System/ Transit Management System (PIS/TMS) interface 185-6 is configured to enable the onboard unit 110 to communicate with the PIS/TMS 190-6. In one example, the PIS/TMS interface 185-6 receives operational data such as distance to an upcoming station, estimated time of arrival at the upcoming station, duration of stoppage at the upcoming station from the PIS/TMS 190-6.

The diagnostics interface 185-7 is configured to enable the onboard unit 110 to communicate with the diagnostics system 190-7 on the rail vehicle 102. The diagnostics system 190-7 may record and store diagnostic information such as faults associated with the rail vehicle 102, operational data associated with the rail vehicle 102, correlations between the faults, an operating state of the rail vehicle 102 and so on.

The driver's cab interface 185-8 is configured to enable the onboard unit 110 to communicate with the driver's cab control 190-8 provided in the driver's cab. For example, the onboard unit 110 may receive operational data associated with the driver's cab control 190-8 associated with opening and closing of doors, operation of lights, communication systems and so on. In another example, the operational data may include a mode of operation of the rail vehicle 102. The mode of operation may be one of manual, automatic, fully automatic, semi-automatic and extended automatic.

The train control interface 185-9 is configured to enable the onboard unit 110 to communicate with one or more train controls 190-9. The train controls 190-9 is configured for providing control signals for driving the rail vehicle 102 and also for actuating brakes. The brakes may include an electric braking system for primary braking and a pneumatic braking system for standby or secondary purposes. In addition to the above, the second memory 180 comprises an offline emergency module 195. The offline emergency module includes a set of machine-readable instructions, which when executed by the processor, manages an operation of the rail vehicle 102 when a communication between the onboard unit 110 and the apparatus 105 is interrupted, for example, when the rail vehicle 102 passes through a tunnel. The second memory may also store predefined operational instructions to be executed when the communication between the onboard unit 110 and the apparatus 105 is interrupted. For example, one of the predefined operational instructions may be associated with downgrading a mode of operation of the rail vehicle 102, say from automatic to manual mode.

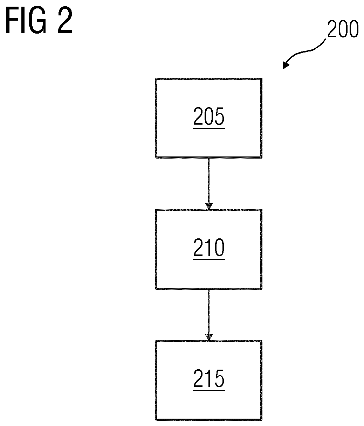

Referring to FIG 2, in conjunction with FIGS 1A, 1B and 1C, a method 200 for managing operation of a rail vehicle 102 is shown, in accordance with one embodiment of the present invention. The method includes steps 205-215. In one embodiment, the method 200 is implemented using the apparatus 105.

At step 205, a virtual subsystem for managing a specific operation of the rail vehicle 102 is identified from a plurality of virtual subsystems based on operational data associated with the rail vehicle 102. The operational data comprises values of parameters associated with the operation of the rail vehicle 102.

At step 210, one or more operational instructions capable of managing operation of the rail vehicle 102 are generated, using the identified virtual subsystem, based on a configuration of the rail vehicle 102.

At step 215, execution of the one or more operational instructions capable of managing operation of the rail vehicle 102, is initiated at system components 190 configured for executing the one or more operational instructions. The system components 190 are located remotely from the first processing unit 125, that is the apparatus 105.

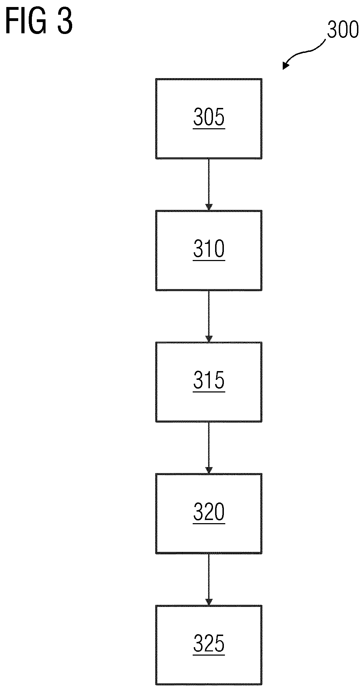

Referring to FIG 3, in conjunction with FIGS 1A, 1B and 1C, a method 300 for mitigating safety risks associated with the rail vehicle 102 is shown, in accordance with one embodiment of the present invention. The method includes steps 305-325. In one embodiment, the method 300 is implemented using the apparatus 105.

At step 305, an anomaly in the operation of the rail vehicle 102 based on the operational data is determined by firstly analysing the operational data with respect to deviation in values of one or more critical parameters with respect to a predefined range of values for the one or more critical parameters. Further, deviation in the values of one or more critical parameters with respect to a predefined range of values for the one or more critical parameters is determined. Based on the deviation in the values of the one or more critical parameters, the anomaly in the operation of the rail vehicle 102 is determined. For example, assume that the anomaly is heating of an axle box present on the rail vehicle 102. The anomaly may be determined by comparing a temperature of the axle to a predefined temperature. The temperature on the axle may be measured using an infrared sensor and transmitted to the apparatus 105 over the onboard unit 110.

Further, if the measured temperature of the axle is greater than the predefined temperature, then the rail vehicle 102 may be associated with the anomaly of overheating of the axle.

At step 310, a root cause associated with the anomaly in the operation of the rail vehicle 102 is determined using a root cause analysis technique. For example, the root cause associated with the anomaly may be determined using a neural network model. The neural network model may be pre-trained using deviation data associated with one or more rail vehicles to determine the root cause. The root cause may be identified as, for example, lack of lubrication in a wheel bearing mounted on the axle.

At step 315, a safety risk associated with the anomaly in the operation of the rail vehicle 102 is predicted. The safety risk may be predicted based on a risk indicator value determined from the operational data. For example, if the risk indicator value is greater than, say 8, the safety risk may be associated with derailment of the rail vehicle 102.

At step 320, one or more actions for mitigating the safety risk are determined. For example, the one or more actions may include lubricating the wheel bearing.

At step 325, operational instructions for implementing the one or more actions for mitigating the safety risk are generated. For example, the operational instructions may be associated with displaying a notification indicating the safety risk and one or more recommendations for mitigating the safety risk on the HMI 190-1. The one or more recommendations for mitigating the safety risk may be prestored in the database 145. For example, the recommendations may include lubricating the wheel bearing at an upcoming stoppage. The operational instructions are further transmitted to the onboard unit 110. The onboard unit 110 may further display the notification on the HMI 190-1.

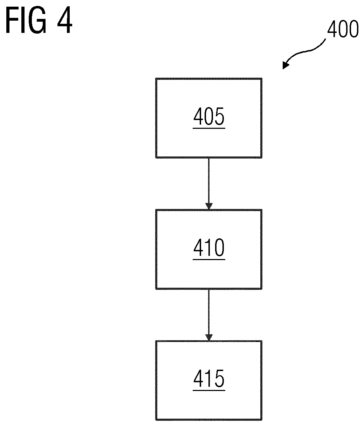

Referring to FIG 4, in conjunction with FIGS 1A, 1B and 1C, a method 400 for optimising a downtime of the rail vehicle 102 is shown, in accordance with one embodiment of the present invention. The method 400 includes steps 405-415. In one embodiment, the method 400 is implemented using the apparatus 105.

At step 405, an anomaly in the operation of the rail vehicle 102 is determined.

At step 410, a remaining life of the rail vehicle 102 is determined based on the anomaly in the operation of the rail vehicle 102. In one embodiment, the remaining life of the rail vehicle 102 may be determined based on the data logged by the data logging module 158. More specifically, the remaining life is determined based on hazard models and probablistic distributions associated with failure times of critical components, available from maintenance data in the data logs. For example, the failure times of a critical component may be determined using bath-tub degradation models, the failure time of another critical component may be based on Poisson's distribution and so on. Further, the remaining life of the rail vehicle 102 may be determined based on, for example, the shortest failure time among all the critical components of the rail vehicle 102.

At step 415, a downtime of the rail vehicle 102 is optimised by scheduling a maintenance activity for the rail vehicle 102 based on the remaining life of the rail vehicle 102. For example, assume that the remaining life of the wheel-bearing is 28 days. The downtime may be optimised by scheduling the maintenance activity based on availability of spare wheel-bearings and service personnel. If the spare wheel-bearings are readily available and the service personnel are free from, say, 3 pm to 5 pm on the same day, and an actual repair time required for replacing the wheel-bearing is 30 mins, then the maintenance activity may be scheduled for the time between 3 pm to 4 pm on the same day. However, if the spare wheel-bearings are unavailable, then the apparatus 105 may transmit a notification to an electronic device of the service personnel to procure the spare wheel-bearings, for example, using a trade portal link associated with sellers of wheel-bearings that is sent along with the notification. Further, the maintenance activity may be scheduled after an estimated time of arrival of the provided on the trade portal link, after the service personnel places an order for the wheel-bearing on the trade portal, and an availability of the service personnal, before the remaining life of the wheel-bearing on the rail vehicle 102 is exhausted.

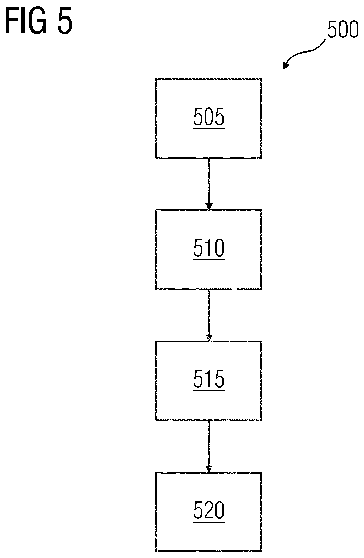

Referring to FIG 5, in conjunction with FIGS 1A, 1B and 1C, a flowchart of a method 500 for managing a vital operation of the rail vehicle 102 is shown, in accordance with one exemplary embodiment of the present invention. The method is implemented on the apparatus 105 and is explained by taking the example of controlling a speed of the rail vehicle 102. The method includes steps 505-520.

At step 505, the apparatus 105 receives the operational data associated with the rail vehicle 102 from the onboard unit 110 located on the rail vehicle 102. The operational data is obtained from the system components 190 communicatively coupled to the onboard unit 110. In the present example, the operational data includes the speed of the rail vehicle 102 received from the radar system 190-3 and a permitted speed of the rail vehicle 102 as received from wayside signalling units.

At step 510, the core manager module 152 identifies the virtual ATP subsystem 168 for controlling the of the rail vehicle 102 based on operational data associated with the rail vehicle 102. The core manager module 152 provides the distance covered by the rail vehicle 102, the speed of the rail vehicle 102, the permitted speed of the rail vehicle 102 and the position of the rail vehicle 102 to the virtual ATP subsystem 168.

At step 515, the virtual ATP subsystem 168 may determine whether the speed of the rail vehicle 102 is below the permitted speed of the rail vehicle 102. If the speed of the rail vehicle 102 is above the permitted speed or if the speed of the rail vehicle 102 is close to the permitted speed, then the virtual ATP subsystem 168 may generate one or more operational instructions for limiting the speed of the rail vehicle 102 based on the configuration of the rail vehicle 102. The one or more operational instructions may be for applying brakes.

At step 520, the one or more operational instructions are transmitted to the onboard unit 110. The onboard unit 110 may further provide control signals to a train control associated with braking, through the train control interface 185-9. The train control may further actuate a brake valve associated with a pneumatic or electric braking system for engaging the brakes.

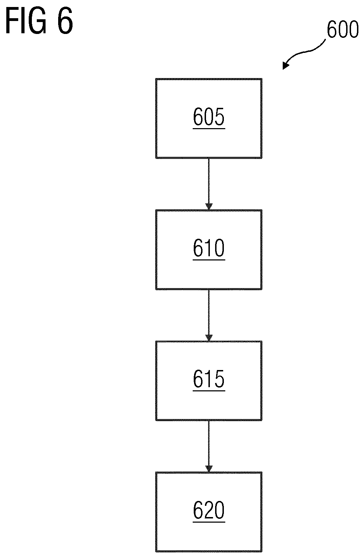

Referring to FIG 6, in conjunction with FIGS 1A, 1B and 1C a flowchart of a method 600 for managing a non-vital operation of the rail vehicle 102 is shown, in accordance with one exemplary embodiment of the present invention. The method 600 is explained by taking the example of the non-vital operation of opening of doors on the rail vehicle 102, along with platform screen doors when the rail vehicle 102 is stopped at an appropriate position at a railway station. The method may be implemented on the apparatus 105. The method 600 includes steps 605-620. Assume that the mode of operation of the rail vehicle 102 is automatic. The mode of operation may be determined by the virtual ATP subsystem 168.

At step 605, apparatus 105 receives the operational data associated with the rail vehicle 102 from the onboard unit 110 located on the rail vehicle 102. The operational data may include the mode of operation received from the virtual ATP subsystem 168 of apparatus 105, track coordinates received from balise 190-5 on the railway track and also track data obtained from the track equipment such as wayside units or from the database 145. The track data may include information associated with a route to be followed by the rail vehicle 102.

At step 610, the core manager module 152 identifies a virtual subsystem for managing opening and closing of doors on the rail vehicle 102. In the present example, although the opening of doors is a non-vital function, it is necessary to ensure that the doors of the rail vehicle 102 are not opened at positions that are unsafe for passengers boarding or deboarding the rail vehicle 102. Therefore, the core manager module 152 initially identifies the virtual ATP subsystem 168 for managing the opening of the doors of the rail vehicle 102.

At step 615, the virtual ATP subsystem 168 analyses the track data and the track coordinates to determines whether the doors may be opened. Further, the virtual ATP subsystem 168 generates a digital output based on the analysis of the track data and the track coordinates. More specifically, the virtual ATP subsystem 168 may generate a digital output indicating whether the doors may be opened or not. For example, assume that the virtual ATP subsystem 168 generates a digital output of '1' indicating that the doors may be opened. The digital output of '1' causes the virtual ATO subsystem 166 to be triggered for generating operational instructions for opening the doors.

At step 620, the operational instructions are transmitted to the onboard unit 110. The onboard unit 110 may further provide the the operational instructions from the virtual ATO subsystem 166 to train control interface 185-9, for operating the doors on the rail vehicle 102. Similarly, the virtual ATO subsystem 166 may also provide operating instructions for synchronous operations of platform screen doors with the doors of the rail vehicle 102.

The apparatus 105 may also generate a report comprising values of parameters that are associated with the operational data, commnads provided to the rail vehicle 102, anomalies detected, root causes of the anomalies, safety risks associated with the anomalies, actions taken for mitigating the safety risks, maintenance activities scheduled, an optimised downtime of the rail vehicle 102 based on the maintenance activities scheduled and so on. The report may be generated, for example, during every 5 minutes of operation of the rail vehicle 102.

The present invention may take the form of a computer program product comprising program modules accessible from computer-usable or computer-readable medium storing program code for use by or in connection with one or more computers, processors, or instruction execution system. For the purpose of this description, a computer-usable or computer-readable medium is any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology may be centralized or distributed (or a combination thereof) as known to those skilled in the art.

### List of reference numerals

- 100: system for managing operation of a rail vehicle
- 102: rail vehicle
- 105: apparatus for managing operation of a rail vehicle
- 110: onboard unit
- 115: network
- 120: first communication unit
- 125: first processing unit
- 130: first display
- 135: first Graphical User Interface (GUI)
- 140: first memory
- 145: database
- 148: management module
- 150: communication module
- 152: core manager module,
- 154: configuration module
- 156: data analysis module
- 158: data logging module
- 160: report generation module
- 164: management module
- 166: virtual ATO subsystem
- 168: virtual ATP subsystem
- 170: virtual ITF subsystem
- 175: second processing unit
- 180: second memory
- 182: second GUI
- 184: second communication unit
- 185: plurality of Input/Output interfaces
- 190: system components
- 195: offline emergency module

## Claims

1. A computer-implemented method for remotely managing operation of a rail vehicle (102) among a plurality of rail vehicles (102-1, 102-2, ..., 102-n), the method comprising:
identifying (205), by a processing unit (125) comprised in an apparatus (105), a virtual subsystem for managing a specific operation of the rail vehicle (102) from a plurality of virtual subsystems
wherein a virtual subsystem is a virtual machine that emulates functionalities of logical components of a physical subsystem used for managing the operation of the rail vehicle, the subsystems being Automatic Train Operation (ATO, 166) or Automatic Train Protection (ATP, 168), and wherein identifying is based on operational data associated with the rail vehicle (102), wherein the operational data comprises values of parameters associated with the operation of the rail vehicle (102);
generating (210) one or more operational instructions capable of managing operation of the rail vehicle (102) using the identified virtual subsystem based on a configuration of the rail vehicle (102), wherein the configuration is prestored in a database and being fetched based on an identity of the rail vehicle, or wherein the configuration is determined based on the operational data; and
initiating (215) execution of the one or more operational instructions capable of managing operation of the rail vehicle (102) at system components (190) configured for executing the one or more operational instructions, wherein the system components (190) are located remotely from the processing unit (125);
wherein an onboard unit (110) is located at the rail vehicle (102), wherein the onboard unit (110) comprises a plurality of interfaces for communicating with the system components (190) and the apparatus (105) for enabling the one or more system components (190) to communicate with the apparatus (105);
wherein when the communication between the onboard unit (110) and the apparatus (105) is interrupted, the onboard unit (110) of the rail vehicle - based on previously stored operational instructions - instructs another onboard unit, in another railcar on the rail vehicle, to communicate with the apparatus (105) for managing the operation of the vehicle.

2. The method according to claim 1, wherein the virtual subsystem is associated with managing communication interfaces present on the rail vehicle (102).

3. The method according to any of claims 1 or 2, further comprising: determining (305) an anomaly in the operation of the rail vehicle (102) based on the operational data, with the following steps:
analysing the operational data with respect to deviation in values of one or more critical parameters with respect to a predefined range of values for the one or more critical parameters;
determining deviation in the values of one or more critical parameters with respect to a predefined range of values for the one or more critical parameters; and
determining the anomaly in the operation of the rail vehicle (102) based on the deviation in the values of the one or more critical parameters.

4. The method according to claim 3, further comprising:
determining (310) a root cause associated with the anomaly in the operation of the rail vehicle (102) using a root cause analysis technique.

5. The method according to any of the claims 3 or 4, further comprising:
predicting (315) a safety risk associated with the anomaly in the operation of the rail vehicle (102);
determining (320) one or more actions for mitigating the safety risk; and
generating (325) operational instructions for implementing the one or more actions for mitigating the safety risk.

6. The method according to any of the claims 3 to 5, further comprising:
determining a remaining life of the rail vehicle (102) based on the anomaly in the operation of the rail vehicle (102).

7. The method according to claim 6, further comprising:
optimising a downtime of the rail vehicle (102) by scheduling a maintenance activity for the rail vehicle (102) based on the remaining life of the rail vehicle (102).

8. The method according to claim 1, further comprising:
generating a report associated with the operation of the rail vehicle (102).

9. The method according to claim 1, wherein the parameters that are associated with the operation of the rail vehicle (102) are selected from the following:
a speed of the rail vehicle,
a permitted speed of the rail vehicle,
a geographical position of the rail vehicle,
a distance covered by the rail vehicle from a starting point,
a distance of the rail vehicle to an upcoming station or a stopping point, stoppages,
a number of brakings, the direction of the rail vehicle,
the identification of signals followed by the rail vehicle,
a mode of operation of the rail vehicle,
a status of communication interfaces on the rail vehicle, and
an operational status of digital inputs and outputs related to fans, lamps or doors.

10. The method according to claim 1, wherein the identifying (205) is based on the source of the operational data, the type of the operational data, or a value of the operational data.

11. The method according to claim 10, wherein the step identifying follows preprocessing the operational data by a communication module (150) by data conversion, filtering or smoothening and wherein identifying comprises routing the preprocessed data to the identified virtual subsystem.

12. An apparatus (105) for remotely managing operation of a rail vehicle (102), the system comprising:
one or more processing units (125); and
a memory unit (140) communicatively coupled to the one or more processing units (125), wherein the memory unit (140) comprises a management module (148) stored in the form of machine-readable instructions executable by the one or more processing units (125), wherein the management module (148) is configured for managing the operation of the rail vehicle (102) according to any of the method claims 1 to 11.

13. A system (100) for managing operation of a rail vehicle (102), the system (100) comprising:
one or more system components (190) for providing operational data associated with the operation of the rail vehicle (102), wherein the operational data comprises values of parameters associated with the operation of the rail vehicle (102); and
an apparatus (105) according to claim 12, communicatively coupled to the one or more system components (190), wherein the apparatus (105) is configured for managing operation of the rail vehicle (102) based on the operational data according to any of the method claims 1 to 11.

14. The system (100) according to claim 13, further comprising an onboard unit (110) located on the rail vehicle (102), the onboard unit (110) comprising:
a plurality of interfaces for communicating with the one or more system components (190) and the apparatus (105) for enabling the one or more system components (190) communicatively coupled with the apparatus (105);
one or more processing units (175); and
a memory unit (180) communicatively coupled to the one or more processing units (175).

15. A computer-program product having machine-readable instructions stored therein, which when executed by one or more processing units (125), cause the processing units (125) to perform a method according to any of the claims 1 to 11.

## Patentansprüche

1. Computerimplementiertes Verfahren zum entfernten Verwalten des Betriebs eines Schienenfahrzeugs (102) aus einer Vielzahl von Schienenfahrzeugen (102-1, 102-2, ..., 102-n), wobei das Verfahren Folgendes umfasst:
identifizieren (205), durch eine Verarbeitungseinheit (125), die in einer Einrichtung (105) enthalten ist, eines virtuellen Teilsystems zum Verwalten eines spezifischen Betriebs des Schienenfahrzeugs (102) aus einer Vielzahl von virtuellen Teilsystemen,
wobei ein virtuelles Teilsystem eine virtuelle Maschine ist, die Funktionalitäten von logischen Komponenten eines physischen Teilsystems emuliert, das zum Verwalten des Betriebs des Schienenfahrzeugs verwendet wird, wobei es sich bei den Teilsystemen um einen automatischen Trainingsbetrieb (Automatic Train Operation, ATO, 166) oder um einen automatischen Trainingsschutz (Automatic Train Protection, ATP, 168) handelt und wobei das Identifizieren auf Betriebsdaten basiert, die dem Schienenfahrzeug (102) zugeordnet sind, wobei die Betriebsdaten Werte von Parametern umfassen, die dem Betrieb des Schienenfahrzeugs (102) zugeordnet sind;
erzeugen (210) von einer oder mehreren Betriebsanweisungen, die in der Lage sind, den Betrieb des Schienenfahrzeugs (102) zu verwalten, unter Verwendung des identifizierten virtuellen Teilsystems basierend auf einer Konfiguration des Schienenfahrzeugs (102), wobei die Konfiguration in einer Datenbank vorgespeichert wird und basierend auf einer Identität des Schienenfahrzeugs abgerufen wird, oder wobei die Konfiguration basierend auf den Betriebsdaten bestimmt wird; und
initiieren (215) der Ausführung der einen oder mehreren Betriebsanweisungen, die in der Lage sind, den Betrieb des Schienenfahrzeugs (102) zu verwalten, an Systemkomponenten (190), die dafür konfiguriert sind, die eine oder mehreren Betriebsanweisungen auszuführen, wobei sich die Systemkomponenten (190) entfernt von der Verarbeitungseinheit (125) befinden; wobei sich eine Bord-Einheit (110) an dem Schienenfahrzeug (102) befindet, wobei die Bord-Einheit (110) eine Vielzahl von Schnittstellen zum Kommunizieren mit den Systemkomponenten (190) und die Einrichtung (105) zum Ermöglichen, dass die eine oder mehreren Systemkomponenten (190) mit der Einrichtung (105) kommunizieren, umfasst;
wobei, wenn die Kommunikation zwischen der Bord-Einheit (110) und der Einrichtung (105) unterbrochen wird, die Bord-Einheit (110) des Schienenfahrzeugs basierend auf zuvor gespeicherten Betriebsanweisungen eine weitere Bord-Einheit in einem weiteren Eisenbahnwagen an dem Schienenfahrzeug anweist, mit der Einrichtung (105) zum Verwalten des Betriebs des Fahrzeugs zu kommunizieren.

2. Verfahren nach Anspruch 1, wobei das virtuelle Teilsystem verwaltenden Kommunikationsschnittstellen, die an dem Schienenfahrzeug (102) vorhanden sind, zugeordnet ist.

3. Verfahren nach einem der Ansprüche 1 oder 2, ferner umfassend:
bestimmen (305) einer Anomalie im Betrieb des Schienenfahrzeugs (102) basierend auf den Betriebsdaten mit den folgenden Schritten:
analysieren der Betriebsdaten in Bezug auf eine Abweichung der Werte von einem oder mehreren kritischen Parametern in Bezug auf einen vordefinierten Wertebereich für den einen oder die mehreren kritischen Parameter;
bestimmen der Abweichung der Werte von einem oder mehreren kritischen Parametern in Bezug auf einen vordefinierten Wertebereich für den einen oder die mehreren kritischen Parameter; und
bestimmen der Anomalie im Betrieb des Schienenfahrzeugs (102) basierend auf der Abweichung der Werte des einen oder der mehreren kritischen Parameter.

4. Verfahren nach Anspruch 3, ferner umfassend:
bestimmen (310) einer Hauptursache, die der Anomalie im Betrieb des Schienenfahrzeugs (102) zugeordnet ist, unter Verwendung einer Technik zur Analyse der Hauptursache.

5. Verfahren nach einem der Ansprüche 3 oder 4, ferner umfassend:
vorhersagen (315) eines Sicherheitsrisikos, das der Anomalie im Betrieb des Schienenfahrzeugs (102) zugeordnet ist;
bestimmen (320) einer oder mehrerer Aktionen zum Abmildern des Sicherheitsrisikos; und
erzeugen (325) von Betriebsanweisungen zum Implementieren der einen oder mehreren Aktionen zum Abmildern des Sicherheitsrisikos.

6. Verfahren nach einem der Ansprüche 3 bis 5, ferner umfassend:
bestimmen einer verbleibenden Lebensdauer des Schienenfahrzeugs (102) basierend auf der Anomalie des Betriebs des Schienenfahrzeugs (102).

7. Verfahren nach Anspruch 6, ferner umfassend:
optimieren einer Ausfallzeit des Schienenfahrzeugs (102) durch zeitliche Planung einer Wartungsaktivität für das Schienenfahrzeug (102) basierend auf der verbleibenden Lebensdauer des Schienenfahrzeugs (102).

8. Verfahren nach Anspruch 1, ferner umfassend:
erzeugen eines Berichts, der dem Betrieb des Schienenfahrzeugs (102) zugeordnet ist.

9. Verfahren nach Anspruch 1, wobei die Parameter, die dem Betrieb des Schienenfahrzeugs (102) zugeordnet sind, aus den folgenden ausgewählt sind:
einer Geschwindigkeit des Schienenfahrzeugs,
einer zulässigen Geschwindigkeit des Schienenfahrzeugs,
einer geographischen Position des Schienenfahrzeugs,
einer von dem Schienenfahrzeug ab einem Startpunkt zurückgelegten Entfernung,
einer Entfernung des Schienenfahrzeugs bis zu einem kommenden Bahnhof oder einem Haltepunkt,
Stillständen,
einer Anzahl von Bremsvorgängen, der Richtung des Schienenfahrzeugs, der Identifikation von Signalen, denen das Schienenfahrzeug folgt,
einem Betriebsmodus des Schienenfahrzeugs,
einem Zustand von Kommunikationsschnittstellen an dem Schienenfahrzeug, und
einem Betriebszustand von digitalen Eingaben und Ausgaben im Zusammenhang mit Gebläsen, Lampen oder Türen.

10. Verfahren nach Anspruch 1, wobei das Identifizieren (205) auf der Quelle der Betriebsdaten, der Art der Betriebsdaten oder einem Wert der Betriebsdaten basiert.

11. Verfahren nach Anspruch 10, wobei der Schritt zum Identifizieren einer Vorverarbeitung der Betriebsdaten durch ein Kommunikationsmodul (150) durch Datenumwandlung, Filtern oder Glätten folgt, und wobei das Identifizieren das Leiten der vorverarbeiteten Daten zu dem identifizierten virtuellen Teilsystem umfasst.

12. Einrichtung (105) zum entfernten Verwalten des Betriebs eines Schienenfahrzeugs (102), wobei das System Folgendes umfasst:
eine oder mehrere Verarbeitungseinheiten (125); und
eine Speichereinheit (140), die kommunikativ mit der einen oder den mehreren Verarbeitungseinheiten (125) gekoppelt ist, wobei die Speichereinheit (140) ein Verwaltungsmodul (148) umfasst, das in Form von maschinenlesbaren Anweisungen gespeichert ist, die von der einen oder den mehreren Verarbeitungseinheiten (125) ausführbar sind, wobei das Verwaltungsmodul (148) zum Verwalten des Betriebs des Schienenfahrzeugs (102) nach einem der Verfahrensansprüche 1 bis 11 konfiguriert ist.

13. System (100) zum Verwalten des Betriebs eines Schienenfahrzeugs (102), wobei das System (100) Folgendes umfasst:
eine oder mehrere Systemkomponenten (190) zum Bereitstellen von Betriebsdaten, die dem Betrieb des Schienenfahrzeugs (102) zugeordnet sind, wobei die Betriebsdaten Werte von Parametern umfassen, die dem Betrieb des Schienenfahrzeugs (102) zugeordnet sind; und
eine Einrichtung (105) nach Anspruch 12, die kommunikativ mit der einen oder den mehreren Systemkomponenten (190) gekoppelt ist, wobei die Einrichtung (105) zum Verwalten des Betriebs des Schienenfahrzeugs (102) basierend auf den Betriebsdaten nach einem der Verfahrensansprüche 1 bis 11 konfiguriert ist.

14. System (100) nach Anspruch 13, ferner umfassend eine Bord-Einheit (110), die sich an dem Schienenfahrzeug (102) befindet, wobei die Bord-Einheit (110) Folgendes umfasst:
eine Vielzahl von Schnittstellen zum Kommunizieren mit der einen oder den mehreren Systemkomponenten (190) und die Einrichtung (105) zum Ermöglichen, dass die eine oder mehreren Systemkomponenten (190) mit der Einrichtung (105) kommunikativ gekoppelt sind;
eine oder mehrere Verarbeitungseinheiten (175); und
eine Speichereinheit (180), die kommunikativ mit der einen oder den mehreren Verarbeitungseinheiten (175) gekoppelt ist.

15. Computerprogrammprodukt, in dem maschinenlesbare Anweisungen gespeichert sind, die bei Ausführung durch eine oder mehrere Verarbeitungseinheiten (125) die Verarbeitungseinheiten (125) dazu veranlassen, ein Verfahren nach einem der Ansprüche 1 bis 11 auszuführen.

## Revendications

1. Procédé mis en œuvre par ordinateur pour gérer à distance le fonctionnement d'un véhicule ferroviaire (102) parmi une pluralité de véhicules ferroviaires (102-1, 102-2, ..., 102-n), le procédé comprenant :
l'identification (205), par une unité de traitement (125) qui est contenue dans un appareil (105), d'un sous-système virtuel pour gérer un fonctionnement spécifique du véhicule ferroviaire (102) parmi une pluralité de sous-systèmes virtuels ;
dans lequel un sous-système virtuel est une machine virtuelle qui émule les fonctionnalités de composants logiques d'un sous-système physique qui est utilisé pour gérer le fonctionnement du véhicule ferroviaire, les sous-systèmes étant des systèmes de conduite automatique des trains (ATO, 166) ou des systèmes de protection automatique des trains (ATP, 168), et dans lequel l'identification est basée sur des données opérationnelles qui sont associées au véhicule ferroviaire (102), et dans lequel les données opérationnelles comprennent des valeurs de paramètres qui sont associés au fonctionnement du véhicule ferroviaire (102) ;
la génération (210) d'une ou de plusieurs instructions opérationnelles permettant de gérer le fonctionnement du véhicule ferroviaire (102) en utilisant le sous-système virtuel identifié sur la base d'une configuration du véhicule ferroviaire (102), dans lequel la configuration est préstockée dans une base de données et est recherchée sur la base d'une identité du véhicule ferroviaire, ou dans lequel la configuration est déterminée sur la base des données opérationnelles ; et
l'initiation (215) de l'exécution des une ou plusieurs instructions opérationnelles permettant de gérer le fonctionnement du véhicule ferroviaire (102) au niveau de composants système (190) qui sont configurés pour exécuter les une ou plusieurs instructions opérationnelles, dans lequel les composants système (190) sont localisés à distance de l'unité de traitement (125) ;
dans lequel une unité embarquée (110) est localisée au niveau du véhicule ferroviaire (102), dans lequel l'unité embarquée (110) comprend une pluralité d'interfaces pour communiquer avec les composants système (190) et l'appareil (105) pour permettre aux un ou plusieurs composants système (190) de communiquer avec l'appareil (105) ; et
dans lequel, lorsque la communication entre l'unité embarquée (110) et l'appareil (105) est interrompue, l'unité embarquée (110) du véhicule ferroviaire - sur la base d'instructions opérationnelles stockées au préalable - demande en instruction à une autre unité embarquée, dans un autre wagon sur le véhicule ferroviaire, de communiquer avec l'appareil (105) pour gérer le fonctionnement du véhicule ferroviaire.

2. Procédé selon la revendication 1, dans lequel le sous-système virtuel est associé à la gestion d'interfaces de communication qui sont présentes sur le véhicule ferroviaire (102).

3. Procédé selon l'une quelconque des revendications 1 ou 2, comprenant en outre :
la détermination (305) d'une anomalie au niveau du fonctionnement du véhicule ferroviaire (102) sur la base des données opérationnelles, à l'aide des étapes suivantes :
l'analyse des données opérationnelles en ce qui concerne une déviation au niveau de valeurs d'un ou de plusieurs paramètres critiques par rapport à une plage prédéfinie de valeurs pour les un ou plusieurs paramètres critiques ;
la détermination d'une déviation au niveau des valeurs d'un ou de plusieurs paramètres critiques par rapport à une plage prédéfinie de valeurs pour les un ou plusieurs paramètres critiques ; et
la détermination de l'anomalie au niveau du fonctionnement du véhicule ferroviaire (102) sur la base de la déviation au niveau des valeurs des un ou plusieurs paramètres critiques.

4. Procédé selon la revendication 3, comprenant en outre :
la détermination (310) d'une cause fondamentale qui est associée à l'anomalie au niveau du fonctionnement du véhicule ferroviaire (102) en utilisant une technique d'analyse de causes fondamentales.

5. Procédé selon l'une quelconque des revendications 3 ou 4, comprenant en outre :
la prédiction (315) d'un risque en matière de sécurité qui est associé à l'anomalie au niveau du fonctionnement du véhicule ferroviaire (102) ;
la détermination (320) d'une ou de plusieurs actions pour réduire le risque en matière de sécurité ; et
la génération (325) d'instructions opérationnelles pour mettre en œuvre les une ou plusieurs actions pour réduire le risque en matière de sécurité.

6. Procédé selon l'une quelconque des revendications 3 à 5, comprenant en outre :
la détermination d'une durée de vie résiduelle du véhicule ferroviaire (102) sur la base de l'anomalie au niveau du fonctionnement du véhicule ferroviaire (102).

7. Procédé selon la revendication 6, comprenant en outre :
l'optimisation d'un temps d'immobilisation du véhicule ferroviaire (102) en planifiant une activité de maintenance pour le véhicule ferroviaire (102) sur la base de la durée de vie résiduelle du véhicule ferroviaire (102).

8. Procédé selon la revendication 1, comprenant en outre :
la génération d'un rapport qui est associé au fonctionnement du véhicule ferroviaire (102).

9. Procédé selon la revendication 1, dans lequel les paramètres qui sont associés au fonctionnement du véhicule ferroviaire (102) sont sélectionnés parmi les paramètres suivants :
une vitesse du véhicule ferroviaire ;
une vitesse autorisée du véhicule ferroviaire ;
une position géographique du véhicule ferroviaire ;
une distance qui est couverte par le véhicule ferroviaire depuis un point de départ ;
une distance du véhicule ferroviaire jusqu'à des arrêts en termes de station à venir ou de point d'arrêt ;
un nombre de freinages, la direction du véhicule ferroviaire ;
l'identification de signaux qui sont suivis par le véhicule ferroviaire ;
un mode de fonctionnement du véhicule ferroviaire ;
un état d'interfaces de communication sur le véhicule ferroviaire ; et
un état opérationnel d'entrées et de sorties numériques qui concernent des ventilateurs, des lampes ou des portes.

10. Procédé selon la revendication 1, dans lequel l'identification (205) est basée sur la source des données opérationnelles, sur le type des données opérationnelles ou sur une valeur des données opérationnelles.

11. Procédé selon la revendication 10, dans lequel l'étape d'identification fait suite au prétraitement des données opérationnelles par un module de communication (150) au moyen d'une conversion de données, d'un filtrage ou d'un lissage de données, et dans lequel l'identification comprend le routage des données prétraitées sur le sous-système virtuel identifié.

12. Appareil (105) pour gérer à distance le fonctionnement d'un véhicule ferroviaire (102), le système comprenant :
une ou plusieurs unités de traitement (125) ; et
une unité de mémoire (140) qui est couplée en termes de communication aux une ou plusieurs unités de traitement (125), dans lequel l'unité de mémoire (140) comprend un module de gestion (148) qui est stocké sous la forme d'instructions lisibles par machine qui peuvent être exécutées par les une ou plusieurs unités de traitement (125), et dans lequel le module de gestion (148) est configuré pour gérer le fonctionnement du véhicule ferroviaire (102) selon l'une quelconque des revendications de procédé 1 à 11.

13. Système (100) pour gérer le fonctionnement d'un véhicule ferroviaire (102), le système (100) comprenant :
un ou plusieurs composants système (190) pour fournir des données opérationnelles qui sont associées au fonctionnement du véhicule ferroviaire (102), dans lequel les données opérationnelles comprennent des valeurs de paramètres qui sont associés au fonctionnement du véhicule ferroviaire (102) ; et
un appareil (105) selon la revendication 12, qui est couplé en termes de communication aux un ou plusieurs composants système (190), dans lequel l'appareil (105) est configuré pour gérer le fonctionnement du véhicule ferroviaire (102) sur la base des données opérationnelles selon l'une quelconque des revendications de procédé 1 à 11.

14. Système (100) selon la revendication 13, comprenant en outre une unité embarquée (110) qui est localisée sur le véhicule ferroviaire (102), l'unité embarquée (110) comprenant :
une pluralité d'interfaces pour communiquer avec les un ou plusieurs composants système (190) et l'appareil (105) pour permettre que les un ou plusieurs composants système (190) soient couplés en termes de communication avec l'appareil (105) ;
une ou plusieurs unités de traitement (175) ; et
une unité de mémoire (180) qui est couplée en termes de communication aux une ou plusieurs unités de traitement (175).

15. Produit de programme informatique comportant des instructions lisibles par machine stockées en son sein qui, lorsqu'elles sont exécutées par une ou plusieurs unités de traitement (125), forcent les unités de traitement (125) à réaliser un procédé selon l'une quelconque des revendications 1 à 11.
